# EUROPÄISCHE PATENTSCHRIFT

(11) **EP 2 839 491 B1**
(45) Veröffentlichungstag und Bekanntmachung des Hinweises auf die Patenterteilung: **05.07.2017**
(21) Anmeldenummer: 13711691.9
(22) Anmeldetag: 25.03.2013
(51) Int. Cl.: H01H 9/00, H01F 29/04, H01H 33/666, H02P 13/06

(54) **LASTSTUFENSCHALTER**
ON-LOAD TAP CHANGER
CHANGEUR DE PRISES EN CHARGE

(30) Priorität: 20.04.2012 DE 102012103489
(43) Veröffentlichungstag der Anmeldung: 25.02.2015
(73) Patentinhaber: Maschinenfabrik Reinhausen GmbH, 93059 Regensburg (DE)
(72) Erfinder: BIERINGER, Alfred, 94333 Geiselhöring (DE); HAMMER, Christian, 93059 Regensburg (DE); PANKOFER, Martin, 94447 Plattling (DE); STREMPEL, Rolf, 93051 Regensburg (DE); STOCKER, Andreas, 93073 Neutraubling (DE)
(86) Internationale Anmeldenummer: PCT/EP2013/056232
(87) Internationale Veröffentlichungsnummer: WO 2013/156262

(56) Entgegenhaltungen:
- WO-A1-94/02955
- WO-A1-2004/088693
- WO-A1-2011/012181
- DE-C1- 4 237 165
- DE-C1- 19 847 745
- US-A1- 2005 099 741

## Beschreibung

Die vorliegende Erfindung betrifft einen Laststufenschalter zur unterbrechungslosen Umschaltung zwischen verschiedenen Wicklungsanzapfungen eines Stufentransformators gemäß dem Oberbegriff des ersten Patentanspruches.

Laststufenschalter sind seit vielen Jahren zur unterbrechungslosen Umschaltung zwischen verschiedenen Wicklungsanzapfungen von Stufentransformatoren in großen Zahlen weltweit im Einsatz. Sogenannte Reaktorschalter, die besonders in Nord-Amerika verbreitet sind, besitzen eine Umschaltreaktanz, die eine langsame, kontinuierliche Umschaltung ermöglicht. Laststufenschalter nach dem Widerstandsschnellschalt-Prinzip bestehen üblicherweise aus einem Wähler zur leistungslosen Anwahl der jeweiligen Wicklungsanzapfung des Stufentransformators, auf die umgeschaltet werden soll, und einem Lastumschalter zur eigentlichen Umschaltung von der bisherigen auf die neue, vorgewählte Wicklungsanzapfung. Der Lastumschalter weist dazu üblicherweise Schaltkontakte und Widerstandskontakte auf. Die Schaltkontakte dienen dabei zur direkten Verbindung der jeweiligen Wicklungsanzapfung mit der Lastableitung, die Widerstandskontakte zur kurzzeitigen Beschaltung, d. h. Überbrückung mittels eines oder mehrerer Überschaltwiderstände. Die Entwicklungen der letzten Jahre führten jedoch weg von Lastumschaltern mit mechanischen Schaltkontakten im Isolieröl. Stattdessen werden vermehrt Vakuumschaltzellen als Schaltelemente eingesetzt.

Ein derartiger Laststufenschalter mit Vakuumschaltröhren ist beispielsweise aus der DE 10 2009 043 171 A1 offenbart. Hier trägt ein Lastumschalter eine von einem Kraftspeicher antreibbare Antriebswelle mit mindestens einer Kurvenscheibe. Die Kurvenscheibe weist mehrere Steuerkurven auf, wobei zwei an der Kurvenscheibe stirnseitig angeordnete Steuerkurven eine von einer Kreisform abweichende Kontur nach Art von Nocken aufweisen, an der kontaktschlüssig jeweils eine über einen Kipphebel mit einer Vakuumschaltröhre verbundene Rolle geführt wird, die die profilierte Kontur der jeweiligen Steuerkurve abgreift.

Bei einer besonderen Gattung von Laststufenschaltern, den so genannten Lastwählern, sind die beschriebenen Mittel zur Anwahl einer neuen Wicklungsanzapfung und die Mittel zur eigentlichen Lastumschaltung baulich vereinigt und werden gemeinsam betätigt. Üblicherweise sind Stufenschalter nach dem Prinzip der Widerstandsschnellschaltung zur unterbrechungslosen Umschaltung von einer Anzapfung eines Stufentransformators zu einer anderen so aufgebaut, dass die jeweils mit den Ausleitungen der Stufenwicklungen elektrisch in Verbindung stehenden festen Stufenkontakte in einer oder mehreren horizontalen Ebene bzw. Ebenen kreisförmig an einem Isolierstoffgerüst oder - zylinder angeordnet sind und durch von konzentrischen Antriebswellen betätigte drehbare Kontaktbrücken beschaltbar sind. Bei Lastwählern, bei denen die Stufenwahl und die eigentliche Lastumschaltung kombiniert sind, erfolgt die Betätigung der Kontaktbrücken dabei sprungartig nach Auslösung eines von der Antriebswelle des Schalters aufgezogenen Energiespeichers, meist Federkraftspeichers.

In der DE 42 37 165 C1 ist, abweichend von diesen üblichen Konstruktionen, ein Stufenschalter mit linearer Kontaktbetätigung beschrieben, wobei die festen Stufenkontakte längs einer Bahn sich in das Innere des Schalters erstrecken und von einem verschiebbaren Schaltmechanismus beschaltbar sind, der wiederum von der Antriebswelle angetrieben wird. Der vertikal verschiebbare Schaltmechanismus besteht dabei aus einem kontinuierlich von der Antriebswelle antreibbaren Aufzugsschlitten, der den neuen festen Stufenkontakt vorwählt, und einem durch den Aufzugsschlitten mittels eines Energiespeichers aufziehbarem Abtriebsteil, das nach Auslösung sprungartig dem Aufzugsschlitten nachläuft und dabei die eigentliche Lastumschaltung von der bisherigen Anzapfung der Stufenwicklung auf die vorgewählte neue Anzapfung vollzieht. Die dazu erforderlichen Schaltelemente sind Bestandteil des Abtriebsteiles.

Aus der DE 198 47 745 C1 ist ein weiterer, auf die Anmelderin zurückgehender, Laststufenschalter mit linear angeordneten Wählerkontakten bekannt geworden. Oberhalb der Wählerkontakte, also örtlich getrennt, befinden sich die den jeweiligen Wählerkontakten einer jeden Phase zugeordneten feststehenden Vakuumschaltröhren zur eigentlichen, sprungartigen Lastumschaltung. Zur Betätigung dieses Laststufenschalters ist ein Federenergiespeicher notwendig, der während seiner Aufzugsbewegung die Wählerkontakte betätigt, als auch die Vakuumschaltelemente durch seine sprungartige Abtriebsbewegung antreibt.

Unabhängig vom konstruktiven Aufbau des Laststufenschalters, also mit rotierendem oder linear bewegbarem Kontaktsystem, bedarf es bei aus dem Stand der Technik bekannten Laststufenschaltern eines Federenergiespeichers zum sprungartigen Umschalten mittels des Kontaktsystems. Aus dem Stand der Technik bekannte Kraftspeicher werden zu Beginn jeder Betätigung des Laststufenschalters von einer Antriebswelle aufgezogen, d. h. gespannt. Die bekannten Kraftspeicher bestehen im Wesentlichen aus einem Aufzugsschlitten und einem Sprungschlitten, zwischen denen Kraftspeicherfedern als Aufgabe der vorliegenden Erfindung ist es daher, einen Laststufenschalter anzugeben, der auf die aufwändige Konstruktion eines Kraftspeichers verzichtet, den Laststufenschalter platzsparend im Transformator anordnet und damit einen deutlich vereinfachten konstruktiven Aufbau bei gleichzeitig erhöhter Betriebssicherheit bietet.

Diese Aufgabe wird durch einen Laststufenschalter zur unterbrechungslosen Umschaltung zwischen verschiedenen Wicklungsanzapfungen eines Stufentransformators mit den Merkmalen des ersten Patentanspruches gelöst. Die Unteransprüche betreffen dabei besonders vorteilhafte Weiterbildungen der Erfindung.

Die allgemeine erfinderische Idee besteht darin, sowohl die Wählerkontakteinheit, als auch die Schaltmittel zur unterbrechungslosen Lastumschaltung mittels eines gemeinsamen Motorantriebes ohne Zwischenschaltung eines Energiespeichers zu betätigen und den gesamten Laststufenschalter mittels eines Getriebemoduls an der Unterseite eines Transformatordeckels anzuordnen. Nach ein bevorzugten Ausführungsform wird dies dadurch erreicht, dass eine durch einen Motorantrieb erzeugte Drehbewegung mittels eines Getriebemoduls auf eine Gewindespindel übertragen wird, die in Eingriff mit einer an einem mittleren Gleitschlitten vorgesehenen Spindelmutter steht, so dass damit eine Längsverschiebung des mittleren Gleitschlittens entlang von Führungsstangen erzeugbar ist, während die übrigen Gleitschlitten mit dem mittleren Gleitschlitten über eine an der zweiten Seite einer Trägerplatte angeordnete, ebenfalls längsverschiebbare, an den mitteleren Gleitschlitten mechanisch gekoppelte Führungskulisse in Wirkverbindung stehen, so dass die übrigen Gleitschlitten ihrerseits mit dem mittleren Gleitschlitten über die Führungskulisse mechanisch gekoppelt sind, derart, dass damit gleichzeitig sowohl die Wählerkontakteinheit als auch die Schaltmittel zur unterbrechungslosen Lastumschaltung betätigbar sind. Es wird also von der Linearbewegung der Wählerkontakteinheit direkt die Betätigung der Vakuumschaltröhren abgeleitet

Nach einer weiteren bevorzugten Ausführungsform der Erfindung weist der Laststufenschalter ein an der Unterseite des Transformatordeckels befestigtes Getriebemodul auf, das mit dem an der gegenüberliegenden Außenseite des Transformatordeckels angeordneten Motorantrieb zusammenwirkt. Das Getriebemodul weist hierfür ein flanschartiges Dichtmodul auf, das direkt an der Unterseite des Transformatordeckels angeordnet ist und mit dem Motorantrieb lösbar verbunden, insbesondere verschraubt, ist. An dem Getriebemodul ist zudem der gesamte Lastumschalter befestigt. Damit hat das Getriebemodul sowohl die Aufgabe, den Laststufenschalter zu halten, als auch mittels des Dichtmoduls gegenüber der Außenseite des Transformators abzudichten. Verwindungen des Transformatordeckels beim Transport des Trafos werden somit nicht an den Laststufenschalter übertragen. Zudem kann damit ein Anschlussflansch mit überfräster Dichtfläche am Transformatordeckel entfallen. Darüber hinaus bietet diese Art der vorgeschlagenen Befestigung eine für den Transformatorbauer einfache Montage des Laststufenschalters innerhalb des Transformatorkessels.

Nach einer weiteren bevorzugten Ausführungsform der Erfindung ist eine Trägerplatte aus einem dielektrischen Material, insbesondere einem Kunststoff, vorgesehen, an der auf einer ersten Seite die Wählerkontakteinheit und an einer zweiten Seite die Schaltmittel zur unterbrechungslosen Umschaltung angeordnet sind, derart, dass die Trägerplatte den für den Laststufenschalter notwendigen Erdabstand herstellt.

Nach einer nochmals weiteren Ausführungsform der Erfindung wird die mindestens eine Wählerkontakteinheit während einer Umschaltung entlang zweier im Wesentlichen parallel angeordneten Führungsstangen bewegt, die eine Linearführung der mindestens einen Wählerkontakteinheitsicherstellen und die von mehreren an der Trägerplatte angeordneten Traversen gehalten werden. Eine Wählerkontakteinheit umfasst dabei jeweils einen Gleitschlitten sowie einen Kontaktträger zur Aufnahme der beweglichen Wählerkontakte, die mit den festen Wählerkontakten zusammenwirken.

Nach einer wiederum weiteren Ausführungsform der Erfindung werden die beweglichen Wählerkontakte jeweils in einem Kontaktträger aufgenommen und wirken mit an der Trägerplatte angeordneten festen Wählerkontakten zusammen, derart, dass die einzelnen festen Wählerkontakte durch eine Längsverschiebung der beweglichen Wählerkontakte samt Gleitschlitten, also der Wählerkontakteinheit, entlang der Führungsstange beschaltbar sind. Durch die Hin- und/oder Herbewegung der Wählerkontakteinheit werden die einzelnen festen Wählerkontakte beschaltet und damit der Regelbereich des Laststufenschalters durchlaufen. Auf besonders einfache Weise bilden die mehreren Traversen, an denen die Führungsstangen gehalten werden, einen mechanischen Anschlag für die längs verfahrbaren beweglichen Wählerkontakte, so dass damit der Regelbereich auch mechanisch begrenzt wird.

Nach einer nochmals weiteren bevorzugten Ausführungsform sind die Schaltmittel zur unterbrechungslosen Umschaltung direkt an dem jeweiligen Gleitschlitten der entsprechenden Wählerkontakteinheit angeordnet. Auch bei dieser Ausführungsform werden die Schaltmittel zur unterbrechungslosen Umschaltung, als auch die Wählerkontakteinheit von einem gemeinsamen Motorantrieb ohne Zwischenschaltung eines Energiespeichers betrieben, indem der Motorantrieb mittels eines Umlenkgetriebes eine zentrale Gewindespindel antreibt, die ihrerseits wiederum die Drehbewegung in eine Längsverschiebung der Gleitschlitten umwandelt, derart, dass dadurch sowohl die beweglichen Wählerkontakte als auch die an der Wählerkontakteinheit angeordneten Schaltmittel zur unterbrechungslosen Umschaltung betätigbar sind.

Nach einer wiederum weiteren bevorzugten Ausführungsform der Erfindung wird von dem Motorantrieb sowohl eine Gewindespindel angetrieben, die ihrerseits mit der Wählerkontakteinheit in Wirkverbindung steht, als auch eine Nockenwelle, mittels der die Schaltmittel zur unterbrechungslosen Umschaltung betätigbar sind. Dies ermöglicht auf besonders vorteilhafte Weise eine einfache unabhängige Betätigung der Wählerkontakteinheit von den Schaltmitteln zur unterbrechungslosen Umschaltung.

Nachfolgend sind die Erfindung und ihre Vorteile unter Bezugnahme auf die beigefügten Zeichnungen ausführlicher beschrieben. Es zeigen:
- Fig. 1: eine schematische Perspektivansicht einer Ausführungsform des erfindungsgemäßen Laststufenschalters;
- Fig. 2a: eine erste seitliche Perspektivansicht des Laststufenschalters nach Figur 1, an der die Wählerkontakte angeordnet sind;
- Fig. 2b: eine zweite seitliche Perspektivansicht des Laststufenschalters nach Figur, an der die Schaltmittel zur unterbrechungslosen Lastumschaltung angeordnet sind;
- Fig. 3: eine Detailansicht der Führungsstangen eines erfindungsgemäßen Laststufenschalters;
- Fig. 4a: eine weitere Detailansicht der Wählerkontakteinheit eines erfindungsgemäßen Laststufenschalters;
- Fig. 4b: eine nochmals weitere Detailansicht der Wählerkontakteinheit eines erfindungsgemäßen Laststufenschalters;
- Figur 5: eine Kontaktleiste eines erfindungsgemäßen Laststufenschalters
- Figur 6a: eine seitliche Perspektivansicht einer weiteren Ausführungsform eines erfindungsgemäßen Laststufenschalters
- Figur 6b: eine Detailansicht der seitlichen Perspektivansicht nach Figur 6a
- Figur 7a: eine erste seitliche Perspektivansicht einer nochmals weiteren Ausführungsform eines erfindungsgemäßen Laststufenschalters
- Figur 7b: eine zweite seitliche Perspektivansicht der nochmals weiteren Ausführungsform nach Figur 7a.

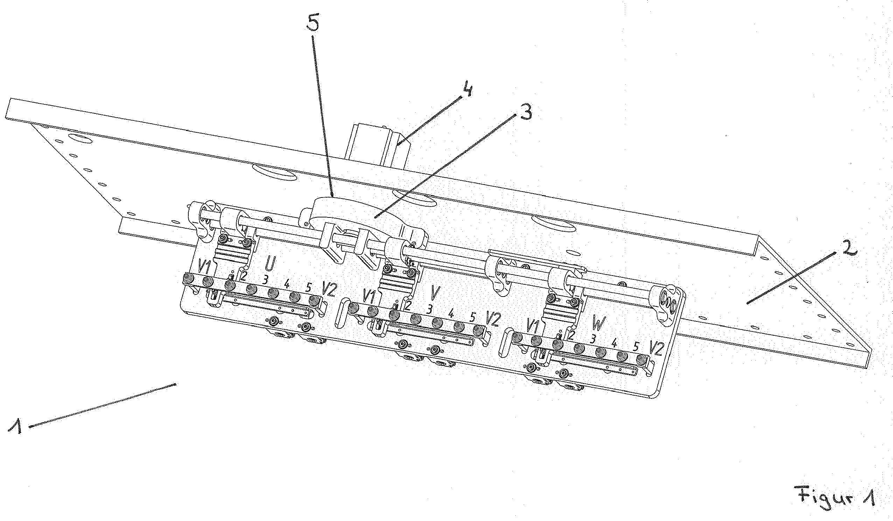

In Figur 1 ist ein erfindungsgemäßer Laststufenschalter 1 in einer Perspektivansicht gezeigt, der direkt unterhalb eines Transformatordeckels 2 eines nicht näher dargestellten Stufentransformators angeordnet ist. Eine genauere Beschreibung der Bauteile des Laststufenschalters 1 und deren Funktion ist der unten stehenden Beschreibung der Figuren entnehmbar. Ein derartiger Stufentransformator, der aus dem Stand der Technik hinreichend bekannt ist, umfasst einen mit Isolieröl befüllten Transformatorkessel, in dem an einem Eisenjoch wenigstens eine Wicklung angeordnet ist. Diese Wicklung unterteilt sich in eine Stamm- und eine Regelwicklung, an der mehrere Wicklungsanzapfungen vorgesehen sind, die den Regelbereich bilden. Zudem weist der Laststufenschalter 1 ein an der Unterseite des Transformatordeckels 2 befestigtes Getriebemodul 3 auf, das mit einem an der gegenüberliegenden Außenseite des Transformatordeckels 2 angeordneten Motorantrieb 4 zusammenwirkt. Der Motorantrieb 4 kann dabei beispielsweise als handelsüblicher Schrittmotor ausgebildet sein. Das Getriebemodul 3 umfasst ein flanschartiges Dichtmodul 5, das direkt an der Unterseite des Transformatordeckels 2 angeordnet ist und mit dem Motorantrieb 4 lösbar verbunden, insbesondere verschraubt, ist. An dem Getriebemodul 3 ist damit der gesamte Laststufenschalter 1 gefestigt. Das Getriebemodul 3 erfüllt sowohl die Aufgabe, den Laststufenschalter 1 zu halten, als auch mittels des Dichtmoduls 5 gegenüber der Außenseite des Transformators hermetisch abzudichten. Verwindungen des Transformatordeckels 2 beim Transport des Transformators werden dadurch nicht an den Laststufenschalter 1 übertragen.

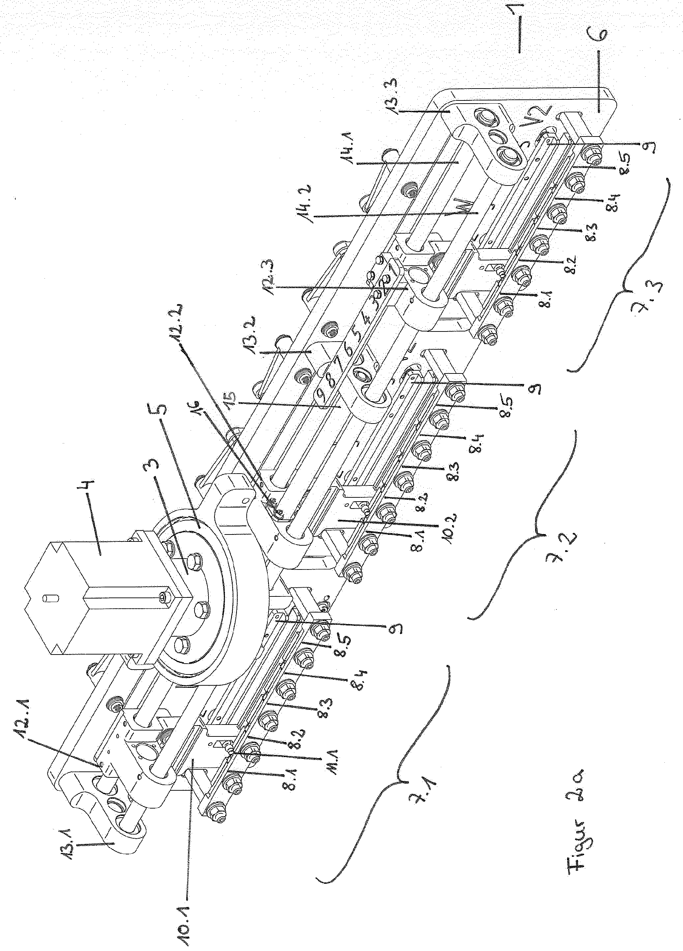

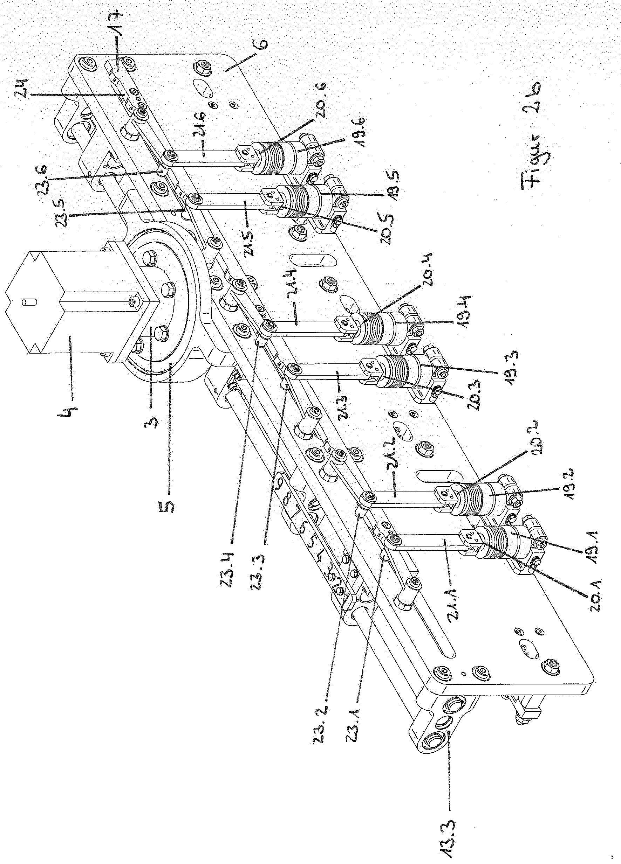

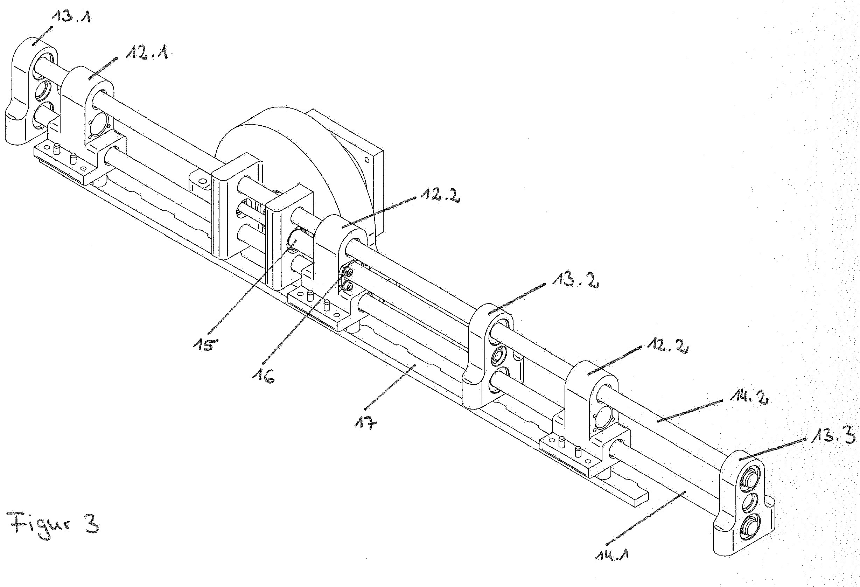

Die Figuren 2a und 2b zeigen den erfindungsgemäßen Laststufenschalter 1 in zwei unterschiedlichen perspektivischen Seitenansichten. Mit dem Getriebemodul 3 mechanisch verbunden ist eine Trägerplatte 6 aus dielektrischem Material, an der die einzelnen Baugruppen des Laststufenschalter 1 befestigbar sind. Die Trägerplatte 6 ist dabei aus elektrisch isolierendem Material gefertigt und dazu ausgebildet, alle wesentlichen Bauteile des Laststufenschalters 1 aufzunehmen. Die Figur 2a zeigt dabei die erste Seite des Laststufenschalters 1, an der die Baugruppen der wenigstens einen Wählerkontakteinheit 7.1, 7.2 und 7.3 an der Trägerplatte 6 befestigt sind. In der Abbildung der Figur 2a gibt es beispielhaft drei Wählerkontakteinheiten 7.1, 7.2 und 7.3; eine jede Wählerkontakteinheit 7.1, 7.2 und 7.3 ist dabei mit einer separaten Phase, also Wicklung, des Stufentransformators verbunden. Eine jede Wählerkontakteinheit 7.1...7.3 umfasst jeweils mehrere beschaltbare feste Wählerkontakte 8.1...8.5, die elektrisch mit den Wicklungsanzapfungen der Regelwicklung des Stufentransformators verbunden sind, eine mit einer Lastableitung LA verbundene Kontaktschiene 9 sowie einen Kontaktträger 10.1 ... 10.3 mit jeweils zwei federnd gelagerten, beweglichen Wählerkontakten 11.1 und 11.2. Abhängig vom Umschaltprinzip, also nach dem Reaktor- oder Widerstandsschnellschalt-Prinzip, sind dabei Mittelstellungen, in denen der eine bewegliche Wählerkontakt, beispielsweise der bewegliche Wählerkontakt 11.1, den ersten festen Wählerkontakt, beispielweise den festen Wählerkontakt 8.1, und der andere bewegliche Wählerkontakt, beispielsweise der bewegliche Wählerkontakt 11.2, den zum ersten festen Wählerkontakt benachbarten zweiten festen Wählerkontakt, beispielsweise den festen Wählerkontakt 8.2, beschaltet, als stationäre Betriebsstellung des Laststufenschalters 1 zulässig. Damit sind nach dem Rekatorschaltprinzip bei hier 5 dargestellten festen Wählerkontakten 8.1...8.5 neun stationäre Betriebsstellungen möglich, während es bei einem Laststufenschalter 1 nach dem Widerstandschnellschalt-Prinzip, bei dem keine Mittelstellungen zulässig sind, nur 5 stationäre Betriebsstellungen gibt. Der Kontaktträger 10.1 ... 10.3 einer jeden Phase ist dabei an einem Gleitschlitten 12.1 ... 12.3 mechanisch fixiert und bildet zusammen mit diesem eine bauliche Einheit. Aufgenommen wird der Gleitschlitten 12.1 ... 12.3 an zwei parallel angeordneten, an der Trägerplatte 6 mittels mehreren Traversen 13.1... 13.3 fixierten, Führungsstangen 14.1 und 14.2, derart, dass die einzelnen festen Wählerkontakte 8.1 ... 8.5 durch eine Längsverschiebung der beweglichen Kontakte 11.1 ... 11.3 samt Gleitschlitten 12.1 .... 12.3 entlang der Führungsstangen 14.1 ...14.2 beschaltbar sind. Hierfür wird eine durch den Motorantrieb 4 erzeugte Drehbewegung mittels des Getriebemoduls 3 auf eine Gewindespindel 15 übertragen, die in Eingriff mit einer an dem mittleren Gleitschlitten 12.2 vorgesehenen Spindelmutter 16 steht, so dass damit eine Längsverschiebung des mittleren Gleitschlittens 12.2 entlang der Führungsstangen 14.1 und 14.2. erzeugbar ist. Die übrigen Gleitschlitten 12.1 und 12.3 stehen mit dem mittleren Gleitschlitten 12.2 über eine an der zweiten Seite der Trägerplatte 6 angeordnete, ebenfalls längsverschiebbaren Führungskulisse 17, in Wirkverbindung, indem die Gleitschlitten 12.1 und 12.3 mit dem Gleitschlitten 12.2 über die Führungskulisse 17 mechanisch gekoppelt sind. Eine genauere Beschreibung dieser mechanischen Zwangsführung der Gleitschlitten 12.1 und 12.3 mittels des Gleitschlittens 12.2 ist der unten stehenden Figurenbeschreibung zu Figur 3 entnehmbar. Die mehreren Traversen 13.1 ... 13.3, an denen die Führungsstangen 14.1 und 14.2 gehalten werden, bilden zudem einen mechanischen Anschlag für die längs verfahrbaren beweglichen Kontakte 10.1 .... 10.3 samt Gleitschlitten 12.1 ...12.3, so dass damit der Regelbereich des Laststufenschalters 1 auch mechanisch begrenzt ist.

Die Figur 2b zeigt dabei die zweite Seite der Trägerplatte 6, an der die Schaltmittel zur unterbrechungslosen Umschaltung angeordnet sind. Bei den Schaltmitteln zur unterbrechungslosen Umschaltung handelt es sich bei der Ausführungsform der Figur 2 b um Vakuumschaltröhren 19.1... 19.6, wobei jeweils zwei Vakuumschaltröhren 19.1 und 19.2, bzw. 19.3 und 19.4, bzw. 19.5 und 19.6 jeweils einer Phase des Laststufenschalters 1 zugeordnet sind und mit einer entsprechenden Wählerkontakteinheit 7.1...7.3 zusammenwirken. Bei den Vakuumschaltröhren 19.1... 19.6 handelt es sich um aus dem Stand der Technik bekannte Schaltmittel mit einem beweglichen Schaltkontakt 20.1...20.6 sowie einem nicht näher dargestellten Festkontakt 18.1...18.6. Jede der Vakuumschaltröhren 19.1 ... 19.6 umfasst dabei einen beweglichen Schaltkontakt 20.1...20.6, der jeweils mit einem Koppelglied 21.1...21.6 und einem Steuerhebel 22.1...22.6 gelenkig an der zweiten Seite der Trägerplatte 6 angeordnet ist. An der gelenkigen Verbindung zwischen dem entsprechenden Koppelglied 21.1... 21...6 und dem Steuerhebel 22.1...22.6 ist jeweils auf der der Trägerplatte 6 zugewandten Seite eine drehbar gelagerte Rolle 23.1...23.6 vorgesehen, die sich partiell kontaktschlüssig an der Oberseite 24 der Führungskulisse 17 entlangrollt. Die Oberseite 24 der Führungskulisse 17 weist dabei eine Profilierung in Form von Nocken auf, so dass die Vakuumschaltröhren 19.1...19.6 durch eine Längsverschiebung der Führungskulisse 17 abhängig von der Profilierung der Oberseite 24 der Führungskulisse 17 beschaltet, d. h. geöffnet bzw. geschlossen werden können.

Figur 3 zeigt eine vereinfachte Detailansicht der mechanischen Kopplung der Gleitschlitten 12.1...12.3 mit der Führungskulisse 17. Es ist das Getriebemodul 3 gezeigt, das über hier nicht näher dargestellte Zahnräder eine Drehbewegung auf die Gewindespindel 15 überträgt, die ihrerseits die Drehbewegung auf eine in dem mittleren Gleitschlitten 12.2 vorgesehene Spindelmutter 16 weitergibt, so dass die Drehbewegung der Gewindespindel 15 in eine Längsbewegung des mittleren Gleitschlittens 12.2 entlang der Führungsstangen 14.1 und 14.2 umgewandelt wird. Indem die Gleitschlitten 12.1...12.3 untereinander mittels der Führungskulisse 17 mechanisch gekoppelt sind, wird letzen Endes durch eine Längsverschiebung des mittleren Gleitschlittens 12.2 entlang der Führungsstangen 14.1 und 14.2 auch eine Längsschiebung der beiden übrigen Gleitschlitten 12.1 und 12.3 bewirkt.

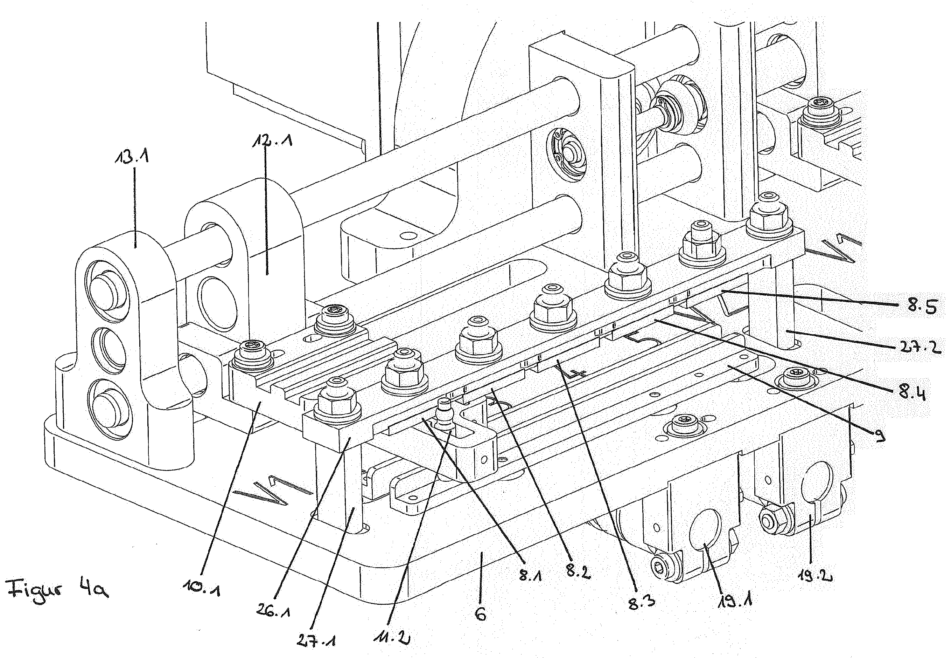

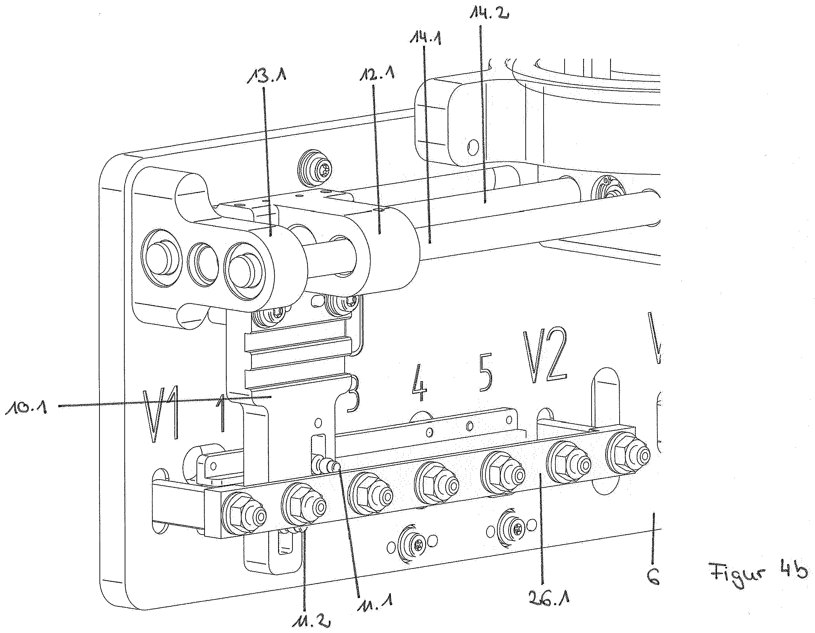

Die Figuren 4a und 4b zeigen in zwei unterschiedlichen Perspektiven eine weitere Detailansicht der Wählerkontakteinheit 7.1 einer Phase des erfindungsgemäßen Laststufenschalters 1 und erläutert diese beispielhaft; die Wählerkontakteinheiten 7.2 und 7.3 sind identisch aufgebaut. Daher gelten die nachfolgenden Erklärungen auch für diese Wählerkontakteinheiten 7.2 und 7.3. Die festen Wählerkontakte 8.1...8.5 sind dabei an einer Kontaktleiste 25.1 aus Kunststoff angeordnet, beispielsweise mittels einer hier dargestellten Schraubverbindung. An der Trägerplatte 6 ist die Kontaktleiste 25.1 mittels jeweils zwei Abstandhaltern 27.1...27.2 befestigt, die als Anschluss einer nicht dargestellten Überschaltdrossel bzw. eines Überschaltwiderstandes genutzt werden. Überschaltdrosseln sind nach dem Reaktorschaltprinzip und Überschaltwiderstände nach dem Widerstandsschnellschaltprinzip vorzusehen. Zudem weist die Kontaktleiste 25.1 an ihrer Längsseite eine Steuerkulisse 26.1 auf, an der beidseitig mehrere Nocken 28.1...28.4 angeordnet sind, um die federnd gelagerten Wählerkontakte 11.1 und 11.2 der entsprechenden Wählerkontakteinheit 7.1 bei einer Längsverschiebung des korrespondieren Gleitschlittens 12.1 mittels der an der Steuerkulisse 26.1 vorgesehenen Nocken 28.1...28.4 vertikal zu bewegen, abhängig von der Kontur der mehreren Nocken 28.1...28.4. Die Kontur der Nocken 28.1...28.4 ist dabei so bemessen, dass die beweglichen Wählerkontakte 11.1 und 11.2 der Wählerkontakteinheit 7.1 zwischen zwei benachbarten festen Wählerkontakten 8.1...8.5 von dem aktuell beschalteten festen Wählerkontakt, hier 8.1, abheben, nachdem sie nach vollzogener Umschaltung den nächsten festen Wählerkontakt, hier 8.2, wieder beschalten. Wobei eine Mittelstellung der beweglichen Wählerkontakte 11.1 und 11.2 auf zwei benachbarten festen Wählerkontakten 8.1 ... 8.5 nach dem Reaktorschaltprinzip zulässig ist, während nach dem Widerstandsschnellschaltprinzip auf den nächsten benachbarten festen Wählerkontakt weitergeschaltet wird. Zur definierten Kontaktgabe sind die Kontaktstücke 11.1 und 11.2 an der eigentlichen Kontaktfläche ballig ausgebildet.

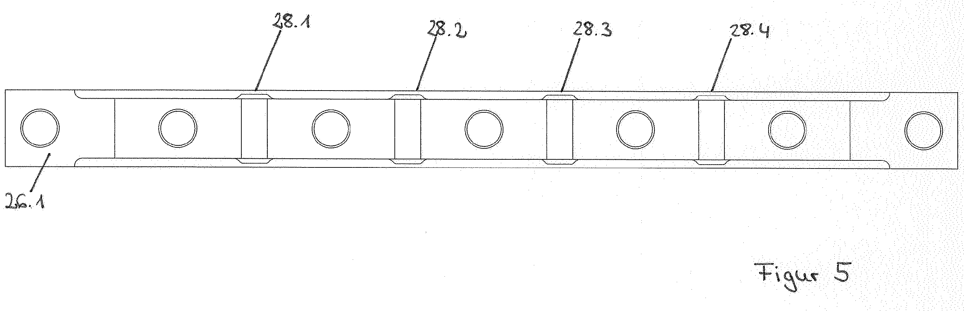

Figur 5 zeigt die Kontaktleiste 25.1... 25.3 mit der Steuerkulisse 26.1...26.3 und den jeweils mehreren Nocken 28.1...28.4 in einer Detaildarstellung, mittels denen sich die entsprechenden beweglichen Wählerkontakte 11.1 und 11.2, bzw. 11.3 und 11.4, bzw. 11.5 und 11.6, einer jeden Wählerkontakteinheit 7.1 ... 7.3 während eines Umschaltvorgangs, abhängig von der Konturierung der Nocken 28.1 ... 28.4, vertikal verschieben.

Im eingebauten Zustand des erfindungsgemäßen Laststufenschalters 1 in einem Stufentransformator sind die beweglichen Schaltkontakte 20.1...20.6 der Vakuumschaltröhren 19.1...19.6 elektrisch mit den der jeweiligen Phase zugehörigen Abstandshaltern 27.1...27.2 und damit letzten Endes mit der entsprechenden Überschaltdrosseln bzw. Überschaltwiderständen verbunden, während der entsprechende Festkontakt 18.1...18.6 der korrespondierenden Vakuumschaltröhre 19.1...19.6 mit der Kontaktschiene 9 der dazugehörigen Phase elektrisch verschaltet wird. Grundsätzlich wäre es jedoch auch denkbar, die elektrische Verschaltung des Laststufenschalters 1 in genau entgegengesetzter Art und Weise zu dem eben Beschriebenen vorzunehmen.

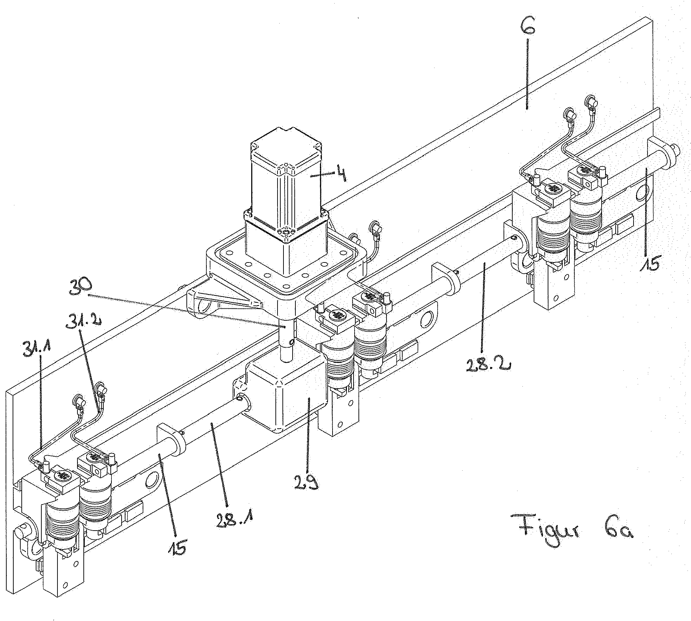

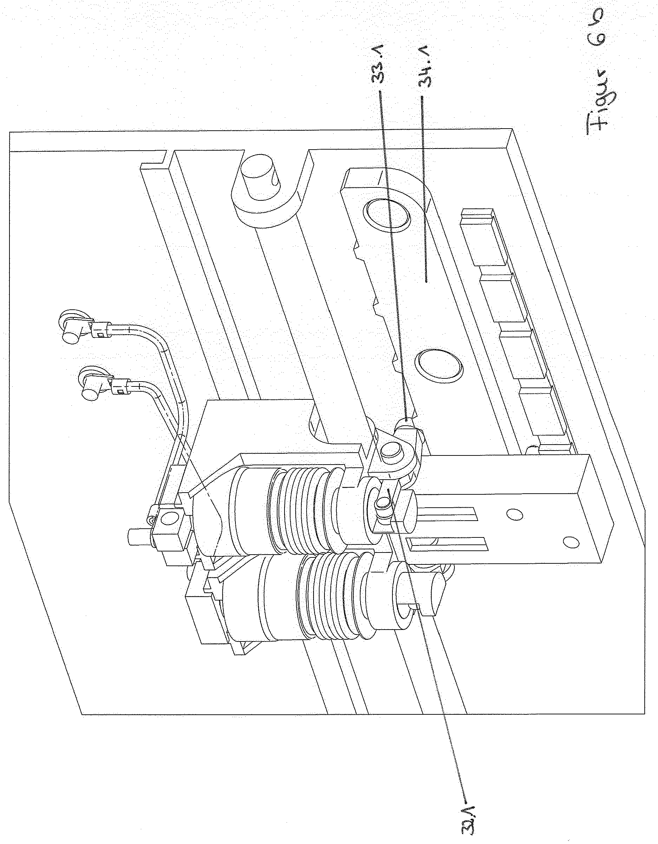

In den Figuren 6a und 6b ist eine weitere Ausführungsform eines erfindungsgemäßen Laststufenschalters 1 gezeigt. In der Figurenbeschreibung wird sich darauf beschränkt, die Unterschiede zu den voranstehenden Figuren zu erläutern, wobei identische Bauteile mit den selben Bezugszeichen wie in den Figuren 1 bis 5 angesprochen werden. Bei dieser Ausführungsform des erfindungsgemäßen Laststufenschalters 1 sind die Schaltmittel zur unterbrechungslosen Umschaltung, also die Vakuumschaltröhren 19.1...19.6, direkt an dem entsprechenden Gleitschlitten 12.1...12.3 der jeweiligen Wählerkontakteinheit 7.1 ... 7.3 angeordnet und samt diesem entlang der Gewindespindel 15 verfahrbar ausgebildet. Eine jede Wählerkontakteinheit 7.1... 7.3 hat bei dieser Ausführungsform ihre eigene, in dieser Darstellung nicht sichtbare, Spindelmutter 16 in dem entsprechenden Gleitschlitten 12.1 ... 12. 3 angeordnet, so dass die Wählerkontakteinheiten 7.1 ...7.3 damit entlang der Gewindespindel 15 synchron verschiebbar ausgebildet sind. Die Gewindespindel 15 ist aus mehreren Teilstücken zusammengebaut und weist zwischen den entsprechenden Teilstücken jeweils ein aus elektrisch isolierendem Material geformtes Kupplungsrohr 28.1...28.2 auf. Zudem ist ein Winkelgetriebe 29 vorgesehen, um die Drehbewegung des Motorantriebs 3 auf die Gewindespindel 15 weiterzugeben. Zwischen dem Motorantrieb 3 und dem Winkelgetriebe 29 ist eine Isolierwelle 30 aus dielektrischem Material angeordnet, die die Drehbewegung des Motorantriebs 3 in das Winkelgetriebe 29 einleitet. Die Festkontakte 18.1....18.6 der an dem entsprechenden Gleitschlitten 12.1...12.3 angeordneten Vakuumschaltröhren 19.1...19.6 sind jeweils mittels Litzen 31.1....31.6 an der Trägerplatte 6 verschraubt und mit nicht dargestellten Überschaltdrosseln bzw. Überschaltwiderständen elektrisch verbunden. Die beweglichen Schaltkontakte 20.1...20.6 der Vakuumschaltröhren 19.1...19.6 stehen mit einer Kipphebelanordnung 32.1...32.6 in mechanischer Wirkverbindung, die jeweils eine Rolle 33.1...33.6 aufweisen. In eingebauten Zustand der Laststufenschalters 1 sind die beweglichen Schaltkontakte 20.1...20.6 der Vakuumschaltröhren 19.1....19.6 mit den beweglichen Wählerkontakten 11.1...11.2 der zugehörigen Phase elektrisch verbunden. Die entsprechenden Rollen 33.1...33.6 wälzen sich bei einer Längsverschiebung des Gleitschlittens 12.1...12.3 an der Profilierung einer Kulissenschiene 34.1...34.3. entlang, so dass damit die jeweilige Kipphebelanordnung 32.1...32.6 den entsprechenden beweglichen Schaltkontakt 20.1...20.6 der dazugehörigen Vakuumschaltröhre 19.1....19.6 abhängig von der Profilierung der Kulissenschiene 34.1...34.3 beschaltet, d.h. öffnet oder schließet. Die festen Wählerkontakte 8.1...8.5, von denen man in dieser Darstellung nur die festen Wählerkontakte 8.3...8.5 sieht, sind hier direkt an der Trägerplatte 6 angeordnet und auf der hier nicht dargestellten, gegenüberliegenden Seite, der Trägerplatte 6 elektrisch mit den entsprechenden Wicklungsanzapfungen der Regelwicklung des Stufentransformators verbunden.

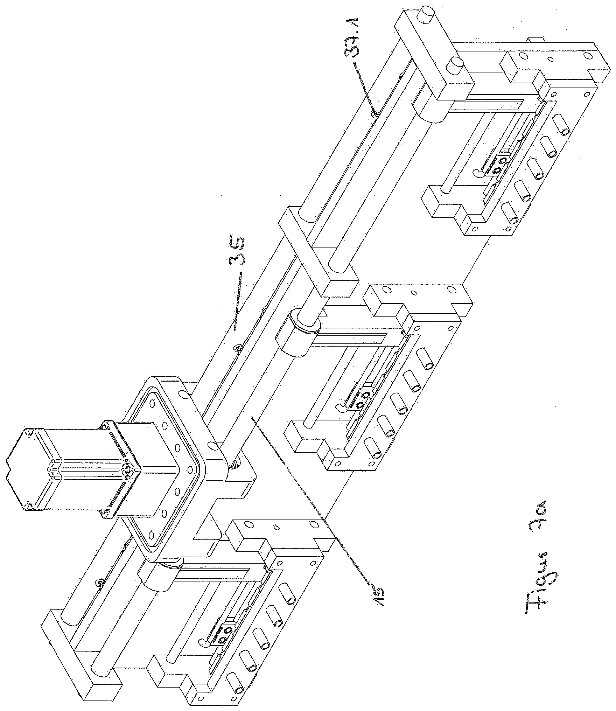

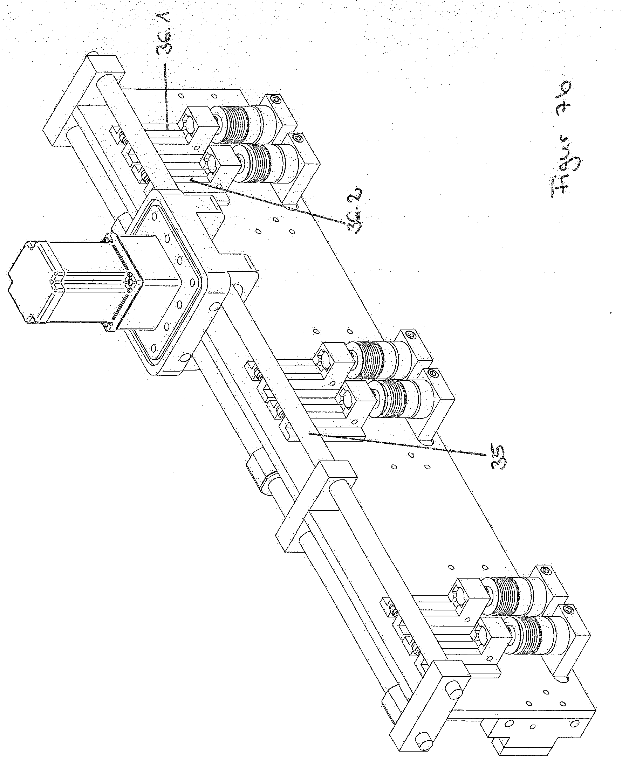

In den Figuren 7a und 7b ist eine nochmals weitere Ausführungsform eines erfindungsgemäßen Laststufenschalters 1 gezeigt. Auch bei dieser Figurenbeschreibung wird sich darauf beschränkt, die Unterschiede zu den voranstehenden Figuren zu erläutern, wobei identische Bauteile mit den selben Bezugszeichen wie in den Figuren 1 bis 5 angesprochen werden. In der Ausführungsform der Figuren 7a und 7b wird von dem Motorantrieb 3 sowohl eine Gewindespindel 15 angetrieben, die ihrerseits mit jeder der Wählerkontakteinheiten 7.1...7.3 in mechanischer Wirkverbindung steht, als auch eine Nockenwelle 35, mittels der die Schaltmittel zur unterbrechungslosen Umschaltung, also die Vakuumschaltröhren 19.1...19.6, betätigbar sind. Entgegen der Darstellung der Figuren 6a und 6b ist die Gewindespindel 15 hier über deren gesamte Länge als Gewindespindel ausgebildet und wird mit der in jedem der Gleitschlitten 12.1... 12.3 vorgesehenen Spindelmutter 16 in Eingriff gebracht, derart, dass bei einer Drehung der Gewindespindel 15 ein jeder Gleitschlitten 12.1...12.3 horizontal verfährt. Die übrige Wählerkontakteinheit 7.1...7.3 ist identisch zu der in Figuren 1 bis 5 beschriebenen Wählerkontakteinheit 7.1...7.3 aufgebaut. Zur Betätigung der Vakuumschaltröhren 19.1...19.6 ist jeder bewegliche Schaltkontakt 20.1....20.6 mit einer Hubstange 36.1...36.6 mechanisch zwangsgekoppelt, die mit, auf der den beweglichen Schaltkontakten 20.1...20.6 gegenüberliegend, an der Nockenwelle 35 angeordneten, Steuernocken 37.1...37.6 zusammenwirkt, derart, dass bei einer Drehung der Nockenwelle 35 die Steuernocken 37.1...37.6 auf die korrespondierende Hubstange 36.1... 36.6 eine Vertikalbewegung einleitet und damit letzten Endes den dazugehörigen beweglichen Schaltkontakt 20.1...20.6 der entsprechenden Vakuumschaltröhren 19.1...19.6 betätigt. Abhängig von der dem Laststufenschalter 1 zu Grunde liegenden Schaltsequenz sind dabei am Umfang der Nockenwelle 35 mehrere Steuernocken 37.1...37.6 je Vakuumschaltröhre 19.1...19.6 vorgesehen.

Zusammenfassend lässt sich feststellen, dass der erfindungsgemäße Laststufenschalter 1 damit sowohl nach dem Reaktorschaltprinzip, als auch nach dem Widerstandsschnellschaltprinzip einsetzbar ist. Abhängig vom zu Grunde liegenden Umschaltprinzip sind bei hier 5 dargestellten festen Wählerkontakten 8.1...8.5 nach dem Reaktorschaltprinzip 9 stationäre Betriebsstellungen zulässig, während bei einem nach dem Widerstandsschnellschaltprinzip aufgebauten erfindungsgemäßen Laststufenschalter 1 lediglich 5 stationäre Betriebsstellungen zulässig sind.

Der erfindungsgemäße Laststufenschalter kann besonders vorteilhaft an Verteiltransformatoren zur Spannungsregelung von Ortsnetzen verwendet werden.

### Bezugszeichenliste

- 1: Laststufenschalter
- 2: Transformatordeckel
- 3: Getriebemodul
- 4: Motorantrieb
- 5: Dichtmodul
- 6: Trägerplatte
- 7.1 ...7.3: Wählerkontakteinheit
- 8.1 ...8.5: feste Wählerkontakte
- 9: Kontaktschiene
- 10.1 ... 10.3: Kontaktträger
- 11.1, 11.2: bewegliche Wählerkontakte
- 12.1 ... 12.3: Gleitschlitten
- 13.1 ... 13.3: Traversen
- 14.1, 14.2: Führungsstangen
- 15: Gewindespindel
- 16: Spindelmutter
- 17: Führungskulisse
- 18.1...18.6: Festkontakte
- 19.1 ... 19.6: Vakuumschaltröhre
- 20.1 ... 20.6: bewegliche Schaltkontakte
- 21.1 ... 21.6: Koppelglieder
- 22.1 ... 22.6: Steuerhebel
- 23.1 ... 23.6: Rolle
- 24: Oberseite Führungskulisse
- 25.1 ... 25.3: Kontaktleiste
- 26.1 ... 26.3: Steuerkulisse
- 27.1 ... 27.2: Abstandshalter
- 28.1 ... 28.2: Kupplungsrohr
- 29: Winkelgetriebe
- 30: Isolierwelle
- 31.1 ... 31.6: Litze
- 32.1 ... 32.6: Kipphebelanordnung
- 33.1 ... 33.6: Rollen
- 34.1 ... 34.3: Kulissenschiene
- 35: Nockenwelle
- 36.1...36.6: Hubstange
- 37.1...37.6: Steuernocken

## Patentansprüche

1. Laststufenschalter (1) zur unterbrechungslosen Umschaltung zwischen verschiedenen Wicklungsanzapfungen eines Stufentransformators, wobei
- mindestens eine Wählerkontakteinheit (7.1, 7.2, 7.3) mit jeweils mehreren festen Wählerkontakten (8.1, 8.2, 8.3, 8.4, 8.5), die jeweils mit den einzelnen Wicklungsanzapfungen elektrisch in Verbindung stehen, längs einer Linie angeordnet ist,
- die festen Wählerkontakte (8.1, 8.2, 8.3, 8.4, 8.5) durch zwei längs verschiebbare bewegliche Wählerkontakte (11.1, 11.2) betätigbar sind,
- zur unterbrechungslosen Umschaltung für jede Phase zwei Schaltmittel (19.1, 19.2, 19.3, 19.4, 19.5, 19.6), die als Vakuumschaltröhren ausgebildet sind, vorgesehen sind,
- ein Motorantrieb (4) zur Einleitung einer Antriebsbewegung in den Laststufenschalter (1) vorgesehen ist,
**dadurch gekennzeichnet, dass**
- die mindestens eine Wählerkontakteinheit (7.1, 7.2, 7.3) und die Schaltmittel zur unterbrechungslosen Umschaltung (19.1, 19.2, 19.3, 19.4, 19.5, 19.6) mittels des gemeinsamen Motorantriebes (4) direkt betätigbar sind, derart, dass die Einleitung der Antriebbewegung des Motorantriebes (4) auf die mindestens eine Wählerkontakteinheit (7.1, 7.2, 7.3) und die Schaltmittel zur unterbrechungslosen Umschaltung (19.1, 19.2, 19.3, 19.4, 19.5, 19.6) ohne Zwischenschaltung eines mechanischen Energiespeichers erfolgt und
- der gesamte Laststufenschalter (1) mittels eines Getriebemoduls (3) an der Unterseite eines Transformatordeckels (2) angeordnet ist.

2. Laststufenschalter nach dem vorigen Anspruch, wobei
- eine durch den Motorantrieb (4) erzeugte Drehbewegung mittels eines Getriebemoduls (3) auf eine Gewindespindel (15) übertragbar ist, die in Eingriff mit einer an einem mittleren Gleitschlitten (12.2) vorgesehenen Spindelmutter steht, so dass damit eine Längsverschiebung des mittleren Gleitschlittens (12.2) entlang von Führungsstangen (14.1,14.2) erzeugbar ist,
- dass die übrigen Gleitschlitten (12.1, 12.3) mit dem mittleren Gleitschlitten (12.2) über eine ebenfalls längsverschiebbare, an dem mittleren Gleitschlitten (12.2) mechanisch gekoppelte Führungskulisse (17) in Wirkverbindung stehen, so dass die übrigen Gleitschlitten (12.1, 12.3) ihrerseits mit dem mittleren Gleitschlitten (12.2) über die Führungskulisse (17) mechanisch gekoppelt sind, derart, dass damit gleichzeitig sowohl die Wählerkontakteinheiten (7.1, 7.2, 7.3) als auch die Schaltmittel zur unterbrechungslosen Lastumschaltung (19.1, 19.2, 19.3, 19.4, 19.5, 19.6) betätigbar sind.

3. Laststufenschalter nach einem der vorigen Ansprüche, wobei
- das Getriebemodul (3) ein flanschartiges Dichtmodul (5) umfasst.

4. Laststufenschalter nach einem der vorigen Ansprüche, wobei
- eine Trägerplatte (6) aus einem dielektrischen Material vorgesehen ist, an deren ersten Seite die mindestens eine Wählerkontakteinheit (7.1, 7.2, 7.3) und an der zweiten Seite die Schaltmittel zur unterbrechungslosen Umschaltung (19.1, 19.2, 19.3, 19.4, 19.5, 19.6) angeordnet sind.

5. Laststufenschalter nach einem der vorigen Ansprüche und Anspruch 2, wobei
- die mindestens eine Wählerkontakteinheit (7.1, 7.2, 7.3) jeweils einen Gleitschlitten (12.1, 12.2, 12.3), einen Kontaktträger (10.1, 10.2, 10.3) sowie jeweils bewegliche Wählerkontakte (11.1, 11.2) umfasst, die mit mindestens einem festen Wählerkontakt (8.1...8.5) zusammenwirken.

6. Laststufenschalter nach einem der vorigen Ansprüche und Anspruch 2 und Anspruch 4, wobei
- der Gleitschlitten (12.1, 12.2, 12.3) von jeweils zwei parallel angeordneten Führungsstangen (14.1, 14.2) aufgenommen wird, die ihrerseits mittels Traversen (13.1, 13.2, 13.3) an der Trägerplatte (6) angeordnet sind.

7. Laststufenschalter nach einem vorigen der Ansprüche und Anspruch 4, wobei
- die beweglichen Wählerkontakte (11.1, 11.2) jeweils in einem Kontaktträger (10.1, 10.2, 10.3) aufgenommen werden und mit an der Trägerplatte (6) angeordneten festen Wählerkontakten (8.1, 8.2, 8.3, 8.4, 8.5) zusammenwirken.

8. Laststufenschalter nach einem der vorigen Ansprüche und Anspruch 2 und Anspruch 6, wobei
- die mindestens eine Wählerkontakteinheit (7.1, 7.2, 7.3) entlang der Führungsstangen (14.1, 14.2) mittels der jeweiligen Gleitschlitten (12.1, 12.2, 12.3) verschiebbar angeordnet ist, derart, dass damit der Regelbereich des Laststufenschalters (1) durchlaufen werden kann.

9. Laststufenschalter nach einem der vorigen Ansprüche und Anspruch 6, wobei
- die mehreren Traversen (13.1, 13.2, 13.3) einen mechanischen Anschlag für die längs der Führungstangen (14.1, 14.2) verschiebbare mindestens eine Wählerkontakteinheit (7.1, 7.2, 7.3) bilden, derart, dass der Regelbereich des Laststufenschalters (1) mechanisch begrenzt ist.

10. Laststufenschalter nach einem der vorigen Ansprüche, wobei
- die beweglichen Wählerkontakte (11.1, 11.2) einer Phase in jeder stationären Betriebsstellung mindestens einen festen Wählerkontakt (8.1, 8.2, 8.3, 8.4, 8.5) derselben Phase des Laststufenschalters (1) beschalten.

11. Laststufenschalter nach einem der vorigen Ansprüche, wobei
- jeweils zwei bewegliche Wählerkontakte (11.1, 11.2) in einem Kontaktträger (10.1, 10.2, 10.3) federnd gelagert aufgenommen werden.

12. Laststufenschalter nach einem der vorigen Ansprüche und Anspruch 2 und Anspruch 4, wobei
- der bewegliche Schaltkontakt (20.1, 20.2, 20.3, 20.4, 20.5, 20.6) der entsprechenden Vakuumschaltröhre (19.1, 19.2, 19.3, 19.4, 19.5, 19.6) jeweils mit einem Koppelglied (21.1, 21.2, 21.3, 21.4, 21.5, 21.6) und einem Steuerhebel (22.1, 22.2, 22.3, 22.4, 22.5,22.6) gelenkig, mechanisch in Wirkverbindung steht,
- an der gelenkigen Verbindung zwischen dem entsprechenden Koppelglied (21.1, 21.2, 21.3, 21.4, 21.5, 21.6) und dem Steuerhebel (22.1, 22.2, 22.3, 22.4, 22.5, 22.6) auf der der Trägerplatte (6) zugewandten Seite eine Rolle (23.1, 23.2, 23.3, 23.4, 23.5, 23.6) vorgehen ist, die sich partiell kontaktschlüssig an einer profilierten Oberseite (24) der Führungskulisse (17) entlangrollt, so dass die jeweilige Vakuumschaltröhre (19.1, 19.2, 19.3, 19.4, 19.5, 19.6) durch eine Längsverschiebung der Führungskulisse (17) abhängig von der Profilierung deren Oberseite (24) beschaltbar ist.

13. Laststufenschalter nach einem der vorigen Ansprüche und Anspruch 4, wobei
- die festen Wählerkontakte (8.1, 8.2, 8.3, 8.4, 8.5) an einer Kontaktleiste (25.1, 25.2, 25.3) angeordnet sind, die ihrerseits jeweils mittels Abstandshaltern (27.1, 27.2, 27.3) an der Trägerplatte (6) befestigt sind.

14. Laststufenschalter nach dem vorigen Anspruch, wobei
- die Kontaktleiste (25.1, 25.2, 25.3) an ihrer Längsseite eine Steuerkulisse (26.1, 26.2, 26.3) aufweist, an der beidseitig mehrere Nocken (28.1, 28.2, 28.3, 28.4) angeordnet sind.

15. Laststufenschalter nach dem vorigen Anspruch, wobei
- die Kontur der Nocken (28.1, 28.2, 28.3, 28.4) so bemessen ist, dass die beweglichen Wählerkontakte (11.1, 11.2) der entsprechenden Wählerkontakteinheit (7.1, 7.1, 7.3) zwischen zwei benachbarten festen Wählerkontakten (8.1, 8.2, 8.3, 8.4, 8.5) von dem aktuell beschalteten festen Wählerkontakt abheben, nachdem die beweglichen Wählerkontakte (11.1, 11.2) nach vollzogener Umschaltung den nächsten festen Wählerkontakt wieder beschalten.

16. Laststufenschalter nach einem der vorigen Ansprüche und Anspruch 2, wobei
- pro Phase jeweils zwei Vakuumschaltröhren (19.1 und 19.2, 19.3 und 19.4, 19.5) und 19.6) direkt an dem entsprechenden Gleitschlitten (12.1, 12.2, 12.3) der jeweiligen Wählerkontakteinheit (7.1, 7.2, 7.3) angeordnet sind,
- der Motorantrieb (4) mittels eines Winkelgetriebes (29) eine zentrale Gewindespindel (15) antreibt,
- jeder Gleitschlitten (12.1, 12.2, 12.3) eine separate Spindelmutter (16) aufweist,
- die Gewindespindel (15) mit der Spindelmutter (16) eines jeden Gleitschlittens (12.1, 12.2, 12.3) zusammenwirkt und die Drehbewegung in eine synchrone Längsverschiebung der mehreren Gleitschlitten (12.1, 12.2, 12.3) umwandelbar ist, derart, dass dadurch sowohl die beweglichen Wählerkontakte (11.1, 11.2) als auch die Vakuumschaltröhren (19.1, 19.2, 19.3, 19.4, 19.5, 19.6) betätigbar sind.

17. Laststufenschalter nach einem der vorigen Ansprüche, wobei
- der Motorantrieb (4) sowohl eine Gewindespindel (15) antreibt, die ihrerseits mit der Wählerkontakteinheit (7.1, 7.2, 7.3) in Wirkverbindung steht, als auch eine Nockenwelle (35), mittels der die Schaltmittel zur unterbrechungslosen Umschaltung (19.1, 19.2, 19.3, 19.4, 19.5, 19.6) betätigbar, derart, dass dadurch sowohl die beweglichen Wählerkontakte (11.1, 11.2) als auch die Schaltmittel zur unterbrechungslosen Umschaltung (19.1, 19.2, 19.3, 19.4, 19.5, 19.6) betätigbar sind.

18. Laststufenschalter nach einem der vorigen Ansprüche zur Verwendung der Spannungsregelung eines Verteiltransformators.

## Claims

1. On-load tap changer (1) for uninterrupted switching over between different winding taps of a tapped transformer, wherein
- at least one selector contact unit (7.1, 7.2, 7.3) with a respective plurality of fixed selector contacts (8.1, 8.2, 8.3, 8.4, 8.5), which are respectively electrically connected with the individual winding taps, is arranged along a line,
- the fixed selector contacts (8.1, 8.2, 8.3, 8.4, 8.5) are actuable by two longitudinally displaceable movable selector contacts (11.1, 11.2),
- for the uninterrupted switching over two switching means (19.1, 19.2, 19.3, 19.4, 19.5, 19.6) constructed as vacuum interrupters are provided for each phase and
- a motor drive (4) for introducing a drive movement into the on-load tap changer (1) is provided,
**characterised in that**
- the at least one selector contact unit (7.1, 7.2, 7.3) and the switching means for the uninterrupted switching over (19.1, 19.2, 19.3, 19.4, 19.5, 19.6) are so directly actuable by means of the common motor drive (4) that introduction of the drive movement of the motor drive (4) into the at least one selector contact unit (7.1, 7.2, 7.3) and the switching means for the uninterrupted switching over (19.1, 19.2, 19.3, 19.4, 19.5, 19.6) takes place without interposition of a mechanical energy store and
- the entire on-load tap changer (1) is arranged by means of a transmission module (3) at the underside of a transformer cover (2).

2. On-load tap changer according to the preceding claim,
**characterised in that**
- a rotational movement generated by the motor drive (4) is transmissible by means of a transmission module (3) to a threaded spindle (15) engaged with a spindle nut provided at a centre slide carriage (12.2) so that a longitudinal displacement of the centre slide carriage (12.2) along guide rods (14.1, 14.2) can thereby be produced,
- the remaining slide carriages (12.1, 12.3) are operatively connected with the centre slide carriage (12.2) by way of a similarly longitudinally displaceable guide link (17), which is mechanically coupled with the centre slide carriage (12.2), so that the remaining slide carriages (12.1, 12.3) in turn are so mechanically coupled with the centre slide carriage (12.2) by way of the guide link (17) that not only the selector contact units (7.1, 7.2, 7.3), but also the switching means for the uninterrupted load switching over (19.1, 19.2, 19.3, 19.4, 19.5, 19.6) are thereby simultaneously actuable.

3. On-load tap changer according to one of the preceding claims, wherein
- the transmission module (3) comprises a flange-like sealing module (5).

4. On-load tap changer according to any one of the preceding claims, wherein
- a support plate (6) of a dielectric material, at the first side of which the at least one selector contact unit (7.1, 7.2, 7.3) and at the second side of which switching means for the uninterrupted switching over (19.1, 19.2, 19.3, 19.4, 19.5, 19.6) are arranged, is provided.

5. On-load tap changer according to any one of the preceding claims and claim 2, wherein
- the at least one selector contact unit (7.1, 7.2, 7.3) comprises a respective slide carriage (12.1, 12.2, 12.3), a respective contact carrier (10.1, 10.2, 10.3) and respective movable selector contacts (11.1, 11.2) which co-operate with at least one fixed selector contact (8.1 ... 8.5).

6. On-load tap changer according to any one of the preceding claims and claim 2 and claim 4, wherein
- the slide carriage (12.1, 12.2, 12.3) is received by two parallelly arranged guide rods (14.1, 14.2) which are in turn arranged at the support plate (6) by means of cross members (13.1, 13.2,13.3).

7. On-load tap changer according to any one of the preceding claims and claim 4, wherein,
- the movable selector contacts (11.1, 11.2) are each received in a contact carrier (10.1, 10.2, 10.3) and co-operate with fixed selector contacts (8.1, 8.2, 8.3, 8.4, 8.5) arranged at the support plate (6).

8. On-load tap changer according to any one of the preceding claims and claim 2 and claim 6, wherein
- the at least one selector contact unit (7.1, 7.2, 7.3) is arranged to be so displaceable along the guide rods (14.1, 14.2) by means of the respective slide carriage (12.1, 12.2, 12.3) that it is thereby possible to run through the regulating range of the on-load tap changer (1).

9. On-load tap changer according to any one of the preceding claims and claim 6, wherein,
- the plurality of cross-members (13.1, 13.2, 13.3) forms a mechanical abutment for the at least one selector contact unit (7.1, 7.2, 7.3), which is displaceable along the guide rods (14.1, 14.2), in such a way that the regulating range of the on-load tap changer (1) is mechanically limited.

10. On-load tap changer according to any one of the preceding claims, wherein
- the movable selector contacts (11.1, 11.2) of a phase in each stationary operational setting connect at least one fixed selector contact (8.1, 8.2, 8.3, 8.4, 8.5) of the same phase of the on-load tap changer (1).

11. On-load tap changer according to any one of the preceding claims, wherein
- in each instance two movable selector contacts (11.1, 11.2) are received in a contact carrier (10.1, 10.2, 10.3) to be resiliently mounted.

12. On-load tap changer according to any one of the preceding claims and claim 2 and claim 4, wherein
- the movable switch contact (20.1, 20.2, 20.3, 20.4, 20.5, 20.6) of the corresponding vacuum interrupter (19.1, 19.2, 19.3, 19.4, 19.5, 19.6) is respectively pivotably and mechanically operatively connected with a coupling element (21.1, 21.2, 21.3, 21.4, 21.5, 21.6) and a control lever (22.1, 22.2, 22.3, 22.4, 22.5, 22.6), and
- provided at the pivotable connection between the corresponding coupling element (21.1, 21.2, 21.3, 21.4, 21.5, 21.6) and the control lever (22.1, 22.2, 22.3, 22.4, 22.5, 22.6) on the side facing the support plate (6) is a roller (23.1, 23.2, 23.3, 23.4, 23.5, 23.6) which rolls along a profiled upper side (24) of the guide link (17) under partially maintained contact so that the respective vacuum interrupter (19.1, 19.2, 19.3, 19.4, 19.5, 19.6) is connectible by a longitudinal displacement of the guide link (17) in dependence on the profiling of the upper side (24) thereof

13. On-load tap changer according to any one of the preceding claims and claim 4, wherein
- fixed selector contacts (8.1, 8.2, 8.3, 8.4, 8.5) are arranged at a contact strip (25.1, 25.2, 25.3), which contact strips in turn are fastened to the carrier plate (6) by means of respective spacers (27.1, 27.2, 27.3).

14. On-load tap changer according to the preceding claim, wherein
- the contact strip (25.1, 25.2, 25.3) has at its longitudinal side a control link (26.1, 26.1, 26.3) at which several lobes (28.1, 28.2, 28.3, 28.4) are arranged on both sides.

15. On-load tap changer according to the preceding claim, wherein,
- the profile of the lobes (28.1, 28.2, 28.3, 28.4) is so dimensioned that the movable selector contacts (11.1, 11.2) of the corresponding selector contact unit (7.1, 7.2, 7.3) between two adjacent fixed selector contacts (8.1, 8.2, 8.2, 8.4, 8.5) lift off the currently connected fixed selector contact after the movable selector contacts (11.1, 11.2) again connect the next fixed selector contact after switching over has been completed.

16. On-load tap changer according to any one of the preceding claims and claim 2, wherein
- two respective vacuum interrupters (19.1 and 19.2, 19.3 and 19.4, 19.5 and 19.6) per phase are directly arranged at the corresponding slide carriage (12.1, 12.2, 12.3) of the respective selector contact unit (7.1, 7.2, 7.3),
- the motor drive (4) drives a central threaded spindle (15) by means of an angle transmission (29)
- each slide carriage (12.1, 12.2, 12.3) has a separate spindle nut (16) and
- the threaded spindle (15) co-operates with the spindle nut (16) of each slide carriage (12.1, 12.2, 12.3) and the rotational movement can be converted into a synchronous longitudinal displacement of the plurality of slide carriages (12.1, 12.2, 12.3) in such a manner that not only the movable selector contacts (11.1, 11.2), but also the vacuum interrupters (19.1, 19.2, 19.3, 19.4, 19.5, 19.6) are thereby actuable.

17. On-load tap changer according to any one of the preceding claims, wherein
- the motor drive (4) drives not only a threaded spindle (15), which in turn is operatively connected with the selector contact unit (7.1, 7.2, 7.3), but also a camshaft (35), by way of which the switching means for the uninterrupted switching over (19.1, 19.2, 19.3, 19.4, 19.5, 19.6) are actuable, in such a manner that both the movable switching contacts (11.1, 11.2) and the switching means for the uninterrupted switching over (19.1, 19.2, 19.3, 19.4, 19.5, 19.6) are thereby actuable.

18. On-load tap changer according to any one of the preceding claims for use in voltage regulation of a distributing transformer.

## Revendications

1. Commutateur à gradins en charge (1) permettant d'effectuer une commutation sans interruption entre différentes prises d'enroulement d'un transformateur à gradins, dans lequel
- au moins une unité de contacts de sélecteur (7.1, 7.2, 7.3) respectivement équipée de plusieurs contacts de sélecteur fixes (8.1, 8.2, 8.3, 8.4, 8.5) respectivement en liaison électrique avec les différentes prises d'enroulement est montée le long d'une ligne,
- les contacts de sélecteur fixes (8.1, 8.2, 8.3, 8.4, 8.5) peuvent être actionnés par deux contacts de sélecteur mobiles en coulissement longitudinal (11.1, 11.2),
- pour permettre d'effectuer une commutation sans interruption, il est prévu, pour chaque phase, deux moyens de commutation (19.1, 19.2, 19.3, 19.4, 19.5, 19.6) qui sont réalisés sous la forme de tubes de commutation à vide,
- il est prévu un entraînement motorisé (4) permettant de transmettre un mouvement d'entraînement dans le commutateur à gradins en charge (1),
**caractérisé en ce que**
- l'unité de contacts de sélecteur (7.1, 7.2, 7.3) et les moyens de commutation permettant d'effectuer une commutation sans interruption (19.1, 19.2, 19.3, 19.4, 19.5, 19.6) peuvent être actionnés directement au moyen de l'entraînement motorisé commun (4) de sorte que la transmission du mouvement d'entraînement de l'entraînement motorisé (4) à l'unité de contacts de sélecteur (7.1, 7.2, 7.3) et aux moyens de commutation permettant d'effectuer une commutation sans interruption (19.1, 19.2, 19.3, 19.4, 19.5, 19.6) s'effectue sans interposition d'un accumulateur d'énergie mécanique,
- la totalité du commutateur à gradins en charge (1) est montée, au moyen d'un module de transmission (3) sur la face inférieure d'un couvercle de transformateur (2).

2. Commutateur à gradins en charge conforme à la revendication précédente, dans lequel :
- le mouvement de rotation produit par l'entraînement motorisé (4) peut être transmis au moyen d'un module de transmission (3) à une broche filetée (15) qui est en prise avec un écrou de broche situé sur un chariot coulissant médian (12.2) de façon à obtenir ainsi un coulissement longitudinal du chariot coulissant médian (12.2) le long de tiges de guidage (14.1, 14.2),
- les autres chariots coulissants (12.1, 12.3) sont en liaison fonctionnelle avec le chariot coulissant médian (12.2) par l'intermédiaire d'une coulisse de guidage (17) également mobile en coulissement longitudinal et couplée mécaniquement au chariot coulissant médian (12.2) de sorte que les autres chariots coulissants (12.1, 12.3) soient de leur côté couplés mécaniquement au chariot coulissant médian (12.2) par l'intermédiaire de la coulisse de guidage (17) pour permettre ainsi d'actionner, simultanément les unités de contacts de sélecteur (7.1, 7.2, 7.3) et également les moyens de commutation permettant une commutation en charge sans interruption (19.1, 19.2, 19.3, 19.4, 19.5, 19.6).

3. Commutateur à gradins en charge conforme à l'une quelconque des revendications précédentes,
dans lequel le module de transmission (3) comporte un module d'étanchéité (5) en forme de bride.

4. Commutateur à gradins en charge conforme à l'une quelconque des revendications précédentes,
dans lequel il est prévu une plaque support (6) en un matériau diélectrique sur une première face de laquelle est montée l'unité de contacts de sélecteur (7.1, 7.2, 7.3) et sur la seconde face de laquelle sont montés les moyens de commutation permettant une commutation sans interruption (19.1, 19.2, 19.3, 19.4, 19.5, 19.6).

5. Commutateur à gradins en charge conforme à l'une des revendications précédentes et à la revendication 2, dans lequel chaque unité de contacts de sélecteur (7.1, 7.2, 7.3) comporte un chariot coulissant (12.1, 12.2, 12.3), un porte contacts (10.1, 10.2, 10.3) ainsi que des contacts de sélecteur mobiles (11.1, 11.2) respectifs qui coopèrent avec au moins un contact de sélecteur fixe (8.1...8.5).

6. Commutateur à gradins en charge conforme à l'une des revendications précédentes à la revendication 2 et à la revendication 4, dans lequel les chariots coulissants (12.1, 12.2, 12.3) sont reçus par deux tiges de guidage (14.1, 14.2) parallèles respectives qui sont, de leur côté, montées au moyen d'entretoises (13.1, 13.2, 13.3) sur la plaque support (6).

7. Commutateur à gradins en charge conforme à l'une des revendications précédentes et à la revendication 4, dans lequel les contacts de sélecteur mobiles (11.1, 11.2) sont respectivement reçus dans un porte-contacts (10.1, 10.2, 10.3) et coopèrent avec des contacts de sélecteur fixes (8.1, 8.2, 83, 8.4, 8.5) montés sur la plaque support (6).

8. Commutateur à gradins en charge conforme à l'une des revendications précédentes à la revendication 2 et à la revendication 6, dans lequel l'unité de contacts de sélecteur (7.1, 7.2, 7.3) est montée coulissante le long des tiges de guidage (14.1, 14.2) au moyen des chariots coulissants respectifs (12.1, 12.2, 12.3) de sorte qu'ainsi la plage de réglage du commutateur à gradins en charge (1) puisse être parcourue.

9. Commutateur à gradins en charge conforme à l'une des revendications précédentes et à la revendication 6, dans lequel les entretoises (13.1, 13.2, 13.3) forment une butée mécanique pour l'unité de contacts de sélecteur (7.1, 7.2, 7.3) susceptible de coulisser le long des tiges de guidage (14.1, 14.2) de sorte que la plage de réglage du commutateur à gradins en charge (1) soit limitée mécaniquement.

10. Commutateur à gradins en charge conforme à l'une des revendications précédentes, dans lequel les contacts de sélecteur mobiles (11.1, 11.2) d'une phase branchent, dans chaque position de fonctionnement stationnaire au moins un contact de sélecteur fixe (8.1, 8.2, 8.3, 8.4, 8.5) de la même phase du commutateur à gradins en charge (1).

11. Commutateur à gradins en charge conforme à l'une des revendications précédentes, dans lequel deux contacts de sélecteur mobiles (11.1, 11.2) sont respectivement reçus en étant montés élastiquement dans un porte-contacts (10.1, 10.2, 10.3).

12. Commutateur à gradins en charge conforme à l'une des revendications précédentes, à la revendication 2 et à la revendication 4, dans lequel
- le contact de commutation mobile (20.1, 20.2, 20.3, 20.4, 20.5, 20.6) des tubes de commutation à vide (19.1, 19.2, 19.3, 19.4, 19.5, 19.6) correspondants est respectivement en liaison fonctionnelle mécanique par articulation avec un organe d'accouplement (21.1, 21.2, 21.3, 21.4, 21.5, 21.6) et un levier de commande (22.1, 22.2, 22.3, 22.4, 22.5, 22.6),
- sur l'articulation entre l'organe d'accouplement correspondant (21.1, 21.2, 21.3, 21.4, 21.5, 21.6) et le levier de commande (22.1, 22.2, 22.3, 22.4, 22.5, 22.6), il est prévu, sur la face tournée vers la plaque support (6) un galet (23.1, 23.2, 23.3, 23.4, 23.5, 23.6) qui roule partiellement par une liaison par contact le long d'une surface profilée (24) de la coulisse de guidage (17), de sorte que les tubes de commutation à vide respectifs (19.1, 19.2, 19.3, 19.4, 19.5, 19.6) puissent être branchés par un coulissement longitudinal de la coulisse de guidage (17) en fonction du profilage de sa surface (24).

13. Commutateur à gradins en charge conforme à l'une des revendications précédentes et à la revendication 4, dans lequel les contacts de sélecteur fixes (8.1, 8.2, 8.3, 8.4, 8.5) sont montés sur une baguette de contact (25.1, 25.2, 25.3) qui est respectivement fixée sur la plaque support (6) au moyen d'écarteurs (27.1, 27.2, 27.3).

14. Commutateur à gradins en charge conforme à l'une des revendications précédentes dans lequel les baguettes de contact (25.1, 25.2, 25.3) comportent sur leur face longitudinale une coulisse de commande (26.1, 26.2, 26.3) sur laquelle sont montées de part et d'autres plusieurs cames (28.1, 28.2, 28.3, 28.4).

15. Commutateur à gradins en charge conforme à l'une des revendications précédentes dans lequel le contour des cames (28.1, 28.2, 28.3, 28.4) est dimensionné de sorte que les contacts de sélecteur mobiles (11.1, 11.2) décollent l'unité de contacts de sélecteur correspondante (7.1, 7.2, 7.3) du contact de sélecteur fixe actuellement branché entre deux contacts de sélecteur fixes (8.1, 8.2, 8.3, 8.4, 8.5) après que les contacts de sélecteur mobiles (11.1, 11.2) aient à nouveau branché le contact de sélecteur fixe suivant après commutation complète.

16. Commutateur à gradins en charge conforme à l'une des revendications précédentes et à la revendication 2, dans lequel :
- pour chaque phase, deux tubes de commutation à vide (19.1 et 19.2, 19.3 et 19.4, 19.5 et 19.6) sont respectivement directement montés sur le chariot coulissant correspondant (12.1, 12.2, 12.3) de l'unité de contacts de sélecteur (7.1, 7.2, 7.3) respective,
- l'entraînement motorisé (4) entraîne une broche filetée centrale (15) au moyen d'un renvoi d'angle (29),
- chaque chariot coulissant (12.1, 12.2, 12.3) comporte un écrou de broche séparé (16),
- la broche filetée (15) coopère avec l'écrou de broche (16) d'un chariot coulissant respectif (12.1, 12.2, 12.3), et, le mouvement de rotation peut être transformé en un coulissement longitudinal synchrone des chariots coulissants (12.1, 12.2, 12.3) de sorte qu'il soit ainsi possible d'actionner les contacts de sélecteur mobiles (11.1, 11.2) et les tubes de commutation à vide (19.1, 19.2, 19.3, 19.4, 19.5, 19.6).

17. Commutateur à gradins en charge conforme à l'une des revendications précédentes
dans lequel l'entraînement motorisé (4) entraîne une broche filetée (15) qui est en liaison fonctionnelle avec l'unité de contacts de sélecteur (7.1, 7.2, 7.3), ainsi qu'un arbre à cames (35) permettant d'actionner les moyens de commutation permettant une commutation sans interruption (19.1, 19.2, 19.3, 19.4, 19.5, 19.6) de façon à pouvoir ainsi actionner les contacts de sélecteur mobiles (11.1, 11.2) et également les moyens de commutation permettant une commutation sans interruption (19.1, 19.2, 19.3, 19.4, 19.5, 19.6).

18. Commutateur à gradins en charge conforme à l'une' des revendications précédentes destiné à être utilisé pour permettre une régulation de la tension d'un transformateur de distribution.
